(19) Europäisches Patentamt

European Patent Office

Office européen des brevets

(11) Veröffentlichungsnummer: **0 250 896**
**B1**

(12) **EUROPÄISCHE PATENTSCHRIFT**

(45) Veröffentlichungstag der Patentschrift:
**16.08.90**

(21) Anmeldenummer: **87107939.8**

(22) Anmeldetag: **02.06.87**

(51) Int. Cl.⁵: **C08F 220/06**, C08F 20/06

(54) Herstellung eines geruchsarmen wasserlöslichen Polymerisats oder Copolymerisats.

(30) Priorität: **14.06.86  DE 3620149**

(43) Veröffentlichungstag der Anmeldung:
**07.01.88 Patentblatt 88/1**

(45) Bekanntmachung des Hinweises auf die Patenterteilung:
**16.08.90 Patentblatt 90/33**

(84) Benannte Vertragsstaaten:
**AT CH DE ES FR GB IT LI NL SE**

(56) Entgegenhaltungen:
**EP-A- 0 113 048**
**US-A- 3 080 347**
**US-A- 4 095 035**

(73) Patentinhaber: **Röhm GmbH, Kirschenallee
Postfach 4242, D-6100 Darmstadt 1(DE)**

(72) Erfinder: **Sütterlin, Norbert, Dr., Am Hang 4,
D-6109 Mühltal Nieder Beerbach(DE)**
Erfinder: **Blitz, Hans-Dieter, Büchnerstrasse 9,
D-6104 Seeheim-Jugenheim(DE)**
Erfinder: **Trabitzsch, Hans, Dr., Weingartenstrasse 7,
D-6104 Seeheim-Jugenheim(DE)**

ACTORUM AG

## Beschreibung

Die Erfindung betrifft ein Verfahren zur Herstellung wasserlöslicher Polymerisate und Copolymerisate der Acryl- oder/und Methacrylsäure von niedrigem bis mittlerem Molekulargewicht, die zur Anwendung in wäßrigen Systemen geeignet sind.

Stand der Technik

Die Polymerisation von Acryl- oder Methacrylsäure, gegebenenfalls zusammen mit damit mischpolymerisierbaren Comonomeren, in wäßriger Lösung zu den entsprechenden wäßrigen Polymerisatlösungen ist eine Standardmethode; vgl. Houben-Weyl, Methoden der organischen Chemie, Band 14/1, S. 1019–21. Die Polymerisation kann bei 80 - 90 Grad C mittels Kalium- oder Ammoniumperoxodisulfat oder bei Raumtemperatur oder wenig darüber mittels Redox-Systemen, beispielsweise Kaliumperoxodisulfat und Natriumhydrogensulfat ausgelöst werden. Weiterhin ist es bekannt, zur Herstellung solcher Polymerisate von niedrigem Molekulargewicht wasserlösliche Mercaptane, wie Thioglykolsäure, als Regler zuzusetzen.

Es ist schwierig, bei diesem Verfahren Polymerisate von bestimmtem Molekulargewicht reproduzierbar herzustellen. Die Eigenschaften der Polymerisate hängen stark vom Molekulargewicht ab, so daß schon geringe Schwankungen in der Produktion zu Produkten mit wechselnden Eigenschaften führen. Um eine bessere Reproduzierbarkeit der Eigenschaften zu gewährleisten, wird in der EP-A 127 388 vorgeschlagen, in wäßriger Lösung erhaltene Polymerisate der Acrylsäure nach dem Molekulargewicht zu fraktionieren, was aber einen zusätzlichen Verfahrensschritt nach der Polymerisation erforderlich macht.

Aus der EP-A 113 048 ist die Polymerisation von Acryl- oder Methacrylsäure gegebenenfalls zusammen mit anderen Comonomeren in einem Pulverbett unter Aufrechterhaltung des Pulverzustands bekannt. Als Initiatorsystem wird z.B. ein Gemisch von Wasserstoffperoxid , Eisensalz und einem Mercaptan, wie Mercaptoäthanol, verwendet. Der Pulverzustand wird während der gesamten Polymerisationsdauer aufrechterhalten. Dabei verdampft das als Lösungsmittel für die Monomeren vewendete Wasser. Es ist unvermeidlich, daß dabei ein Teil des Mercaptans mitverflüchtigt wird, das wegen seines äußerst unangenehmen Geruchs nicht in die Abluft geraten darf. Ein weiterer Teil des Mercaptans bleibt zwangsläufig in dem Pulverprodukt zurück und verleiht diesem einen unangenehmen Geruch.

US-A 4 095 035 beschreibt ein Verfahren, bei dem Acryl- oder Methacrylsäure oder ihre Salze mit Wasserstoffperoxid als Initiator in Gegenwart von Mercaptanen zu oligomeren Produkten polymerisiert werden. Die Beispiele zeigen, daß die Polymerisation unerträglich langsam verläuft, wenn in einem wäßrigen Medium mit Wasserstoffperoxid als Initiator polymerisiert wird. In den Beispielen I bis III wird eine Polymerisationszeit von 67 Stunden benötigt.

## Aufgabe und Lösung

Ziel der Erfindung ist die Herstellung von Polymerisaten der Acryl- oder/und Methacrylsäure oder von Copolymerisaten dieser Säuren mit anderen, damit mischpolymerisierbaren Monomeren unter gezielter Einstellung des Molekulargewichts. Weiterhin soll der unangenehme Geruch, der den mit Mercaptanen hergestellten Polymerisaten von niederem bis mittlerem Molekulargewicht sonst zu eigen ist, vermieden werden.

Es wurde gefunden, daß die Polymerisation von Acryl- bzw. Methacrylsäure oder die Mischpolymerisation von mindestens 50 Mol % Acryl- oder/und Methacrylsäure mit höchstens 50 Mol % eines oder mehrerer anderer damit mischpolymerisierbarer Monomerer, jeweils bezogen auf die Molsumme der polymerisierbaren Monomeren, in wäßriger Lösung dann in gut reproduzierbarer Weise zu einem wasserlöslichen Polymerisat mit vorbestimmbarem Molekulargewicht führt, wenn die Polymerisation mittels eines Redoxsystems aus Wasserstoffperoxid, einem wasserlöslichen Eisensalz und einem wasserlöslichen Mercaptan ausgelöst wird.

Die reduzierte Viskosität des entstehenden Polymerisats, die ein Maß für die Größe des durchschnittlichen Molekulargewichts bzw. Polymerisationsgrades darstellt, erweist sich als wenig oder gar nicht abhängig von der eingesetzten Menge an Wasserstoffperoxid, was das Verfahren gegenüber Schwankungen in der Konzentration des Wasserstoffperoxids weitgehend unempfindlich macht.

Dagegen ergibt sich eine eindeutige und reproduzierbare Abhängigkeit der reduzierten Viskosität von der Menge des wasserlöslichen Mercaptans. Diese Abhängigkeit erstreckt sich bis herab zu Molekulargewichten von einigen Tausend, wie aus folgender Tabelle hervorgeht:

Molekulargewicht (Gewichts- bzw. Zahlenmittelwert) von Polyacrylsäure, hergestellt in 50 %iger wäßriger Lösung in Gegenwart von 1,5 - 7,5 Gew.-% Wasserstoffperoxid, 0,005 Gew.-% Eisen-II-sulfat und 1 bis 5 Gew.-% Mercaptoäthanol (jeweils bez. auf Acrylsäure) bei 20 Grad C Anfangstemperatur. Alle Molekulargewichte beziehen sich auf eine mit dem Natriumsalz der Polyacrylsäure erstellte GPC-Eichkurve.

| Mercapto-äthanol | Wasserstoff-peroxid | Molekulargewicht | | Uneinheit-lichkeit |
|---|---|---|---|---|
| | | Gew.-Mittel | Zahlenmittel | |
| 0,5 | 1,5 | 57000 | 18000 | 2,3 |
| 1 | 3,3 | 28100 | 11200 | 1,5 |
| 2 | 3,3 | 14600 | 5360 | 1,73 |
| 5 | 3,3 | 4940 | 1460 | 2,39 |
| 7 | 4,5 | 3360 | 1860 | 0,81 |
| 10 | 4,5 | 2300 | 1350 | 0,70 |
| 20 | 7,5 | 1250 | 770 | 0,61 |

Die verhältnismäßig geringe Uneinheitlichkeit ist ein Vorteil, der der spezifischen Wirksamkeit zugute kommt.

Es ist zwar an sich bekannt, durch Einsatz von Mercaptanen Polymerisate von geringem Molekulargewicht zu erzeugen, jedoch ist gerade bei Einsatz großer Mengen an Mercaptanen die Reproduzierbarkeit im Gegensatz zum Verfahren der Erfindung in der Regel unbefriedigend. Weiterhin werden hohe Mercaptanmengen wegen des äußerst unangenehmen Geruchs der damit hergestellten Polymerisate möglichst vermieden. Überraschenderweise sind die erfindungsgemäß hergestellten Polymerisate bzw. ihre wäßrigen Lösungen fast geruchslos, was vermutlich auf die Oxydation des Schwefelatoms des Mercaptans oder von dessen Folgeprodukten zu einer Sulfoxidgruppe zurückzuführen ist.

Ausführung der Erfindung

Die erfindungsgemäß hergestellten Polymerisate haben vorzugsweise die Struktur

$$E - ( - S_n - M_m)_p - E$$

worin
E eine Endgruppe der Struktur H-, RS-, R-30- oder HO-
R den Rest eines wasserlöslichen Mercaptans
S eine polymerisierte Einheit der Acrylsäure oderMethacrylsäure oder von deren einwertigem Salz,
M eine polymerisierte Einheit eines oder verschiedener mit Acrylsäure bzw. Methacrylsäure mischpolymeri sierbarer Comonomerer
p die mittlere Gesamtzahl der Einheiten S und M,
n der prozentuale Anteil der Einheiten S in Grundmol-%,
m der prozentuale Anteil der Einheiten M in Grundmol-% bedeuten.

Dabei entspricht p dem Polymerisationsgrad, der sich aus den Mittelwerten der Anzahl der Einheiten von Acryl- oder Methacrylsäure (S) und gegebenenfalls der Comonomeren (M) ergibt. Die Werte n und m beziehen sich auf die Gesamtmolzahl der den Einheiten S und M zugrundeliegenden Monomeren, was als Grundmolprozent bezeichnet wird. n hat einen Wert im Bereich von 50 bis 100 % und m einen Wert zwischen 0 und 50 %. Die Einheiten S und M liegen im Regelfall in statistischer Verteilung vor, so daß sich die Indizes n und m nur auf ihre Mengenanteile, jedoch nicht auf ihre Reihenfolge beziehen.

Durch Start oder Abbruch einer Polymerisationskette an den aus dem Zerfall von Wasserstoffperoxid gebildeten Hydroxylradikalen entstehen Hydroxylgruppen als Endgruppen E. Durch Übertragungsreaktionen an dem wasserlöslichen Mercaptan entstehen Endgruppen E = H und E = RS- bzw. durch Oxydation des Schwefelatoms R-SO- . Andere Endgruppen kommen nicht vor.

Die Säureeinheiten S werden vorzugsweise aus Acrylsäure gebildet. Acryl- und Methacrylsäure können jeweils für sich zu Homopolymerisaten oder gemeinsam zu einem Mischpolymerisat beider Säuren polymerisiert werden. Das gleiche gilt für die einwertigen Salze dieser Säuren, d.h. Salze von einwertigen Kationen, wie Alkali- und Ammoniumsalzen. Neben diesen Säuren oder ihren Salzen können ein oder mehrere andere Comonomere am Aufbau der wasserlöslichen Polymerisate beteiligt sein, wobei deren Mengenanteil je nach ihrer hydrophilen oder hydrophoben Natur so zu bemessen ist, daß das Polymerisat als ganzes wasserlöslich ist.

Stark hydrophile Comonomere, insbesondere solche, die bei Raumtemperatur mehr als 10 gewichtsprozentige wäßrige Lösungen bilden, können bis zu 50 Mol-% der Monomeren ausmachen. Dazu gehören z.B. Acryl- und Methacrylamid, N-Methy lol-acryl- und -methacrylamid, N-Vinylpyrrolidon, Hydroxyalkylester der Acryl- und Methacrylsäure, insbesondere solche mit 2 bis 4 C-Atomen im Hydroxyalkylrest, Dialkylaminoalkylester und Dialkylaminoalkylamide der Acryl- und Methacrylsäure, die in der Regel 4 bis 10 C-Atome im Dialkylaminoalkylrest enthalten.

3

Eine wichtige Gruppe von Comonomeren besteht aus schwach hydrophilen Verbindungen, die bei Raumtemperatur 1 bis 10 prozentige wäßrige Lösungen bilden. Hier erweisen sich gerade solche Polymerisate, die infolge eines hohen Anteils an diesen Comonomeren an der Grenze der Wasserlöslichkeit stehen, für verschiedene Anwendungen als besonders vorteilhaft.

Der höchstzulässige Anteil dieser Comonomeren richtet sich auch nach der verwendeten Säure und eventuellen weiteren Comonomeren von höherer Hydrophilie.

Acrylsäure kann mit einem höheren Anteil dieser Monomeren mischpolymerisiert werden als Methacrylsäure- Ebenso vertragen die wasserlöslichen Salze der Acryl- oder Methacrylsäure höhere Anteile dieser Comonomeren als die freien Säuren, ohne die Wasserlöslichkeit zu verlieren.

Für die Anwendung des Polymerisats als calciumbindendes Mittel erweist sich Äthylacrylat als das bestgeeignete Comonomer. Mischpolymerisate aus 60 - 90 Mol% Acrylsäure und 40 bis 10 Mol% Äthylacrylat zeichnen sich durch ein besonders hohes Calciumbindevermögen aus.

Sehr gute Ergebnisse werden auch mit Methylacrylat, Acrylnitril und niederen Hydroxyalkylestern der Acryl- und Methacrylsäure (mit 2 bis 4 C-Atomen im Hydroxyalkylrest) erzielt. Ebenso sind Gemische der genannten Comonomeren vorteilhaft. Für andere Anwendungsgebiete kommen auch weitere Comonomere, wie niedere Acrylsäure- und Methacrylsäurealkylester mit weniger als 4 Kohlenstoffatomen im Alkylrest und Methacrylnitril, in Betracht.

Noch stärker hydrophobe Comonomere, die bei Raumtemperatur weniger als 1-prozentige wäßrige Lösungen bilden, verleihen dem Mischpolymerisat zunehmenden Tensidcharakter. Das gilt zum Beispiel für die höheren Ester der Acryl- oder Methacrylsäure oder anderer ungesättigter, polymerisierbarer Mono- oder Dicarbonsäuren, wobei die Alkylreste beispielsweise 4 bis 18 C-Atome enthalten können. Der Anteil dieser hydrophoben Comonomeren geht in der Regel über 20 Mol% nicht hinaus.

Das Molekulargewicht der Polymerisate kann durch die Einstellung der Polymerisationsbedingungen, insbesondere durch die Wahl der Menge des wasserlöslichen Mercaptans, in einem weiten Bereich gewählt und mit hoher Genauigkeit reproduziert werden. Das Gewichtsmittel des Molekulargewichts kann im Bereich von 800 bis 100 000 liegen. Bevorzugt ist der Molekulargewichtsbereich von 800 bis 20 000. Die Uneinheitlichkeit liegt insbesondere bei Verwendung von Mercaptoäthanol in der Regel unter 3, vorzugsweise zwischen 0,5 und 1,5. Die Molekulargewichte beziehen sich auf eine mit dem Natriumsalz der Polyacryl- bzw. Polymethacrylsäure erstellte GPC-Eichkurve.

Das Polymerisationsverfahren wird in wäßriger Lösung durchgeführt, was voraussetzt, daß das Monomerengemisch als Ganzes in Wasser löslich ist. Acryl- bzw. Methacrylsäure wirken dabei als Lösungsvermittler für die nicht oder wenig wasserlöslichen Monomeren, so daß diese in höherer Konzentration vorliegen können als ihrer Löslichkeit in reinem Wasser entspricht. Vorzugsweise enthält die wäßrige Monomerenlösung 10 bis 60 Gew.-% polymerisierbare Monomere.

Das Initiatorsystem ist ein Redoxsystem, das Wasserstoffperoxid als oxydierende Komponente enthält. Außerdem wirkt das Wasserstoffperoxid oxydierend auf die Schwefelatome des Mercaptans ein. Seine Konzentration kann 0,5 bis 10 Gew.-%, vorzugsweise 1 bis 8 Gew.-%, bezogen auf das Gewicht der Monomeren betragen. Das wasserlösliche Mercaptan bildet gleichzeitig die reduzierende Komponente des Redoxsystems und einen Molekulargewichtsregler. Geeignet sind z.B. Mercaptoäthanol, welches bevorzugt ist, und Thioglykolsäure. Wasserstoffperoxid wird in einem Molverhältnis von etwa dem 0,1- bis 10-fachen des Mercaptans eingesetzt. Um den Mercaptangeruch zu unterdrücken, ist eine äquivalente oder überschüssige Menge des Wasserstoffperoxids im Verhältnis zum Mercaptan empfehlenswert. Die Menge des wasserlöslichen Mercaptans richtet sich nach dem angestrebten Molekulargewicht. Werden 0,5 bis 1 Gew.-% eingesetzt, so sind Polymerisate mit Molekulargewichten im Bereich von 10 000 bis 100 000 erreichbar. Vorzugsweise werden 1 bis 20 Gew.-% des Mercaptans eingesetzt, wobei Polymerisate mit Molekulargewichten von 800 bis 10 000 herstellbar sind.

Als wasserlösliches Eisensalz eignen sich besonders die Salze des zweiwertigen Eisens, z.B. Eisen-II-Sulfat. Das Eisenion wirkt katalytisch auf die Redoxreaktion ein, so daß niedrige Konzentrationen, z.B.10 - 1 000 ppm ausreichen. Höhere Konzentrationen sind anwendbar, können aber Nebenreaktionen und Verfärbungen auslösen.

Die Polymerisation kann im Temperaturbereich von 10 bis 60 Grad C, vorzugsweise bei Raumtemperatur, begonnen werden. Im Laufe der Polymerisation steigt die Temperatur erheblich an. Die Polymerisation kann in der Weise ausgelöst werden, daß man der wäßrigen Monomerlösung die Komponenten des Initiatorsystems zusetzt, vorzugsweise in der Reihenfolge Eisensalz, Wasserstoffperowid, Mercaptan. Gewünschtenfalls können auch das wasserlösliche Mercaptan und das Eisensalz vorher in der Monomerenlösung gelöst und das Wasserstoffperoxid allein zur Polymerisationsauslösung zugesetzt werden. Ebenso ist es möglich, im Lauf der Polymerisation weitere Anteile der Monomeren und/oder des Redoxsystems bzw. seiner Komponenten gleichmäßig oder portionsweise unter Rühren zuzugeben.

Die Polymerisation ist in der Regel nach wenigen Minuten abgeschlossen. Es entsteht eine klare viskose Polymerisatlösung. Ihre Viskosität hängt vom Molekulargewicht des Polymerisats und vom Feststoffgehalt ab. Es ist vorteilhaft, diese Größen so aufeinander abzustimmen, daß die Viskosität nicht über 100 Pa.s, vorzugsweise nicht über 20 Pa.s liegt.

Für viele Zwecke kann die Polymerisatl, ösung als solche eingesetzt werden. Zie kann jedoch auch in bekannter Weise, z.B. durch Walzentrocknung oder Sprühtrocknung, in ein pulverförmiges Festprodukt umgewandelt werden, das sich bei Bedarf wieder in Wasser lösen läßt.,

4

Anwendung

Die erfindungsgemäss hergestellten Polymerisate eignen sich für alle Zwecke, für die bisher entsprechende Acrylsäure oder Methacrylsäurepolymerisate von niedrigem bis mittlerem Molekulargewicht eingesetzt worden sind, zeichnen sich vor diesem aber in der Regel durch eine höhere Wirksamkeit je Gewichtseinheit aus.

Das Anwendungsgebiet läßt sich im weitesten Sinne mit der Dispergierung von feststoffreichen und feststoffarmen wäßrigen Systemen umschreiben. Dazu gehören Dispergiermittel für Mineralstoffe und Pigmente in feststoffreichen Systemen, Sedimentationsverzögerer für Trübstoffe, Krustenverhinderer mit Wirksamkeit gegen Calciumcarbonat- und Calciumphosphat-Krusten, calciumbindende Mittel und Zusätze zu Wasch- und Reinigungsflotten, Kalt- und Heißwassersystemen, Phosphatersatzstoffe, die z.B. in Anteilen von 1 bis 10 Gew.-% in Waschmitteln eingesetzt werden können. Weitere Anwendungen sind Viskositätsregulierungsmittel für wäßrige Beschichtungsmassen, Verlaufshilfsmittel, Appreturen und Schlichten für Textilien.

Beispiel 1

In einem mit Rührer und Thermometer versehenen Glasgefäß werden 300 g Wasser, 100 g Acrylsäure, 0,5 g Mercaptoäthanol und 0,01 g Eisen-II-sulfat vorgelegt und 5 g 30 %ige Wasserstoffperoxidlösung zugegeben. In kurzer Zeit steigt die Temperatur auf 80 - 90 Grad C an. Nach Beendigung der Reaktion wird auf Zimmertemperatur abgekühlt und nochmals 100 g Acrylsäure und 0,5 g Mercaptoäthanol zugegeben. Die Polymerisation dieser zweiten Stufe wird wiederum durch Zusatz von 5 g 30%iger Wasserstoffperoxidlösung ausgelöst.

Man erhält eine klare, ca. 40 %ige Polymerisatlösung von schwach säuerlichem Geruch und einer Viscosität von ca. 10 000 mPas. Das Gewichtsmittel des Molekulargewichts beträgt 57 000; die Uneinheitlichkeit 2,3.

Beispiele 2 - 6

Es wird verfahren wie in Beispiel 1, jedoch werden anstelle der dort genannten Mengen Mercaptoäthanol und Wasserstoffperoxid die in der nachfolgenden Tabelle angegebenen Mengen eingesetzt.

Weiterhin sind in der Tabelle die Zahlen- und Gewichtsmittelwerte der erhaltenen Molekulargewichte sowie die sich dadurch ergebende Uneinheitlichkeiten dargestellt. Die Produkte sind frei von Geruch nach Schwefelverbindungen.

Tabelle 1:

| Beispiel Nr. | Wasser (g) | Monomere (g) | Mercapto-äthanol (g) | Wasserstoff-peroxid-lösung 30 %ig (g) | Eisen(II)-sulfat (g) | Feststoff-gehalt (%) | Mw 1) | Mn 2) | U 3) |
|---|---|---|---|---|---|---|---|---|---|
| 1 | 300 | 1. Stufe: 100 Acrylsäure | 0,5 | 5,0 | 0,01 | | | | |
| | - | 2. Stufe: 100 Acrylsäure | 0,5 | 5,0 | - | 40 | $5,7 \cdot 10^4$ | $1,8 \cdot 10^4$ | 2,3 |
| 2 | 300 | 1. Stufe: 100 Acrylsäure | 1,0 | 10,0 | 0,01 | | | | |
| | - | 2. Stufe: 100 Acrylsäure | 1,0 | 10,0 | - | 40 | $2,8 \cdot 10^4$ | $1,1 \cdot 10^4$ | 1,5 |
| 3 | 300 | 1. Stufe: 100 Acrylsäure | 2,0 | 10,0 | 0,01 | | | | |
| | - | 2. Stufe: 100 Acrylsäure | 2,0 | 10,0 | - | 40 | $1,46 \cdot 10^4$ | $5,4 \cdot 10^3$ | 1,7 |
| 4 | 300 | 1. Stufe: 100 Acrylsäure | 5,0 | 10,0 | 0,01 | | | | |
| | - | 2. Stufe: 100 Acrylsäure | 5,0 | 10,0 | - | 40 | $5,0 \cdot 10^3$ | $1,5 \cdot 10^3$ | 2,4 |
| 5 | 545 | 1. Stufe: 181 Acrylsäure | 12,7 | 27,3 | 0,018 | | | | |
| | - | 2. Stufe: 181 Acrylsäure | 12,7 | 27,3 | - | 40 | $3,3 \cdot 10^3$ | $1,86 \cdot 10^3$ | 0,81 |
| 6 | 526 | 1. Stufe: 175 Acrylsäure | 35,0 | 43,8 | 0,0175 | | | | |
| | - | 2. Stufe: 175 Acrylsäure | 35,0 | 43,8 | - | 40 | $1,25 \cdot 10^3$ | $7,77 \cdot 10^2$ | 0,61 |

1) Mw = Gewichtsmittelwert des Molekulargewichts
2) Mn = Zahlenmittelwert des Molekulargewichts
3) U = Uneinheitlichkeit

EP 0 250 896 B1

Beispiel 7

In einer wie in Beispiel 1 beschriebenen Apparatur werden 545 g Wasser, 181 g Methacrylsäure, 12,7 g Mercaptoäthanol und 0,018 g Eisen(II)sulfat vorgelegt und 27,2 g 30 %-ige Wasserstoffperoxidlösung zugegeben. In kurzer Zeit steigt die Temperatur auf 80 - 90 Grad C an. Man erhält eine ca. 28 %-ige Polymerisatlösung, die frei von Geruch nach Schwefelverbindungen ist.
Ihre Viskosität beträgt ca. 100 mPas.
Das Gewichtsmittel des Molekulargewichtes liegt bei 2180, das Zahlenmittel bei 1310 und die Uneinheitlichkeit bei 0,66.
Das Polymerisat besitzt eine hohe Wirksamkeit als Pigmentverteiler in wäßrigen Überzugsmittelsystemen.

Beispiel 8

Gemäß Beispiel 1 werden 555 g Wasser, 277,5 g Methacrylsäure, 97,5 g Acrylsäure, 33,3 g Mercaptoäthanol, 0,018 g Eisen(II)sulfat und 40,7 g 30 %-ige Wasserstoffperoxidlösung zur Reaktion gebracht. Man erhält eine schwach säuerlich riechende, 40 %-ige, klare Polymerisatlösung mit einer Viskosität von ca. 400 mPas. Das Gewichtsmittel des Molekulargewichtes beträgt 2940, das Zahlenmittel 1600, die Uneinheitlichkeit 0,84. Das Polymerisat besitzt eine gute Wirksamkeit als Pigmentverteiler.

Beispiele 9 - 18

Die Beispiele 9 - 18 beschreiben die Copolymerisate von Methacrylsäure oder Acrylsäure mit Estern, Hydroxyestern, Amiden und Nitrilen der Acrylsäure bzw. Methacrylsäure. Es wird wie in Beispiel 1 verfahren. Die Zusammensetzung der Monomerengemische sowie die verwendeten Mengen an Mercaptoäthanol und Wasserstoffperoxid sind zusammen mit den erhaltenen Molekulargewichten in Tabelle 2 angegeben. Alle Polymerisatlösungen sind frei von Geruch nach Schwefelverbindungen. Die Polymerisate der Beispiele 9,10,11,15,16 und 17 besitzen ein besonders hohes Calcium-Bindevermögen von > 1000 mg CaCO$_3$/g eingesetzter Festsubstanz. Im Vergleich dazu hat reine Polyacrylsäure vergleichbaren Molekulargewichts nur ein Calciumbindevermögen von ca. 500 mg CaCO$_3$/g Festsubstanz.
Das Calciumbindevermögen wird folgendermaßen bestimmt:
1 g Polymerisat-Trockensubstanz werden in 100 ml Wasser gelöst und die Lösung mit 10 ml 2-%iger Sodalösung versetzt. Die Lösung wird mit Natronlauge auf pH 9 eingestellt und bei diesem Wert mit einer 4,41 %igen wäßrigen Lösung von Calciumacetat bis zur bleibenden Trübung titriert. Das Calciumbindevermögen pro Gramm Polymerisat ergibt sich aus der in Milliliter bestimmten Titrationsmenge durch Multiplikation mit dem Faktor 25.

Tabelle 2:

| Beispiel Nr. | Wasser (g) | Monomere (g) | Mercapto-äthanol (g) | Wasserstoff-peroxid-lösung 30 %ig (g) | Eisen(II)-sulfat (g) | Feststoff-gehalt (%) | Mw | Mn | U | CaCO₃-Binde-vermögen (mg CaCO₃/g Trockensubstanz) |
|---|---|---|---|---|---|---|---|---|---|---|
| 9 | 600 | 1. Stufe: 170 Acrylsäure 30 Acrylsäure-äthylester<br><br>– 2. Stufe: 170 Acrylsäure 30 Acrylsäure-äthylester | 12,0 | 20 | 0,02 | 40 | $3,4\cdot10^3$ | $1,73\cdot10^3$ | 0,96 | 1830 |
| 10 | 563 | 1. Stufe: 163,5 Acrylsäure 24,1 Acrylsäure-methylester<br><br>– 2. Stufe: 163,5 Acrylsäure 24,1 Acrylsäure-methylester | 7,5<br><br>7,5 | 18,7<br><br>18,7 | 0,018<br><br>– | 40 | $3,6\cdot10^3$ | | 0,58 | 1034 |
| 11 | 600 | 160 Acrylsäure 40 Acrylsäure-methylester | 12,0 | 20,0 | 0,02 | 28 | $2,36\cdot10^3$ | | 0,69 | 2800 |
| 12 | 563 | 1. Stufe: 167,6 Acrylsäure 20,0 Acrylsäure-amid<br><br>– 2. Stufe: 167,6 Acrylsäure 20,0 Acrylsäure-amid | 7,5<br><br>7,5 | 18,7<br><br>18,7 | 0,018<br><br>– | 43 | $3,39\cdot10^3$ | | 0,91 | 550 |
| 13 | 563 | 1. Stufe: 163,4 Acrylsäure 24,2 Methacryl-säureamid<br><br>2. Stufe: 163,4 Acrylsäure 24,2 Methacryl-säureamid | 7,5<br><br>7,5 | 18,7<br><br>18,7 | 0,018<br><br>– | 42 | $3,06\cdot10^2$ | | 0,80 | 640 |

EP 0 250 896 B1

Fortsetzung zu Tabelle 2:

| Beispiel Nr. | Wasser (g) | Monomere (g) | Mercapto-äthanol (g) | Wasserstoff-peroxid-lösung 30 %ig (g) | Eisen(II)-sulfat (g) | Feststoff-gehalt (%) | Mw | Mn | U | $CaCO_3$-Binde-vermögen (mg $CaCO_3$/g Trockensubstanz) |
|---|---|---|---|---|---|---|---|---|---|---|
| 14 | 600 | 196,0 Acrylsäure<br>4,0 Acrylsäure-n-butylester | 12,0 | 20 | 0,01 | | $2,18 \cdot 10^3$ | $1,35 \cdot 10^3$ | 0,62 | 611 |
| 15 | 600 | 160,0 Acrylsäure<br>40,0 Acrylsäure-nitril | 12,0 | 20,0 | 0,02 | 27 | $2,41 \cdot 10^3$ | | 0,44 | 2280 |
| 16 | 540 | 108,0 Acrylsäure<br>72,0 2-Hydroxy-äthylacrylat | 13,5 | 18,5 | 0,018 | 26 | $2,3 \cdot 10^3$ | | 0,86 | 2800 |
| 17 | 540 | 162,0 Acrylsäure<br>18,0 2-Hydroxy-äthylacrylat | 13,5 | 18,5 | 0,018 | 26 | $1,47 \cdot 10^3$ | | 0,54 | 1350 |
| 18 | 540 | 162,0 Methacryl-säure<br>18,0 2-Hydroxy-äthylacrylat | 13,5 | 18,5 | 0,018 | 27 | $1,92 \cdot 10^3$ | $1,26 \cdot 10^3$ | 0,52 | 502 |

EP 0 250 896 B1

Beispiele 19 - 22

Die Beispiele 19 - 22 demonstrieren die Unempfindlichkeit der Molekulargewichtssteuerung von der Wasserstoffperoxidkonzentration.

Im übrigen wird wie in Beispiel 1 verfahren.

Tabelle 3:

| Beispiel Nr. | Wasser (g) | Acrylsäure (g) 1. Stufe | Acrylsäure (g) 2. Stufe | Mercapto-äthanol pro Stufe (g) | Wasserstoff-peroxid-lösung 30 %ig (g) 1. Stufe | Wasserstoff-peroxid-lösung 30 %ig (g) 2. Stufe | Eisen(II)-sulfat (g) | Feststoff-gehalt (%) | $M_W$ |
|---|---|---|---|---|---|---|---|---|---|
| 19 | 300 | 100 | 100 | 2,0 | 5 | 5 | 0,01 | 40 | $1,35 \cdot 10^4$ |
| 20 | 300 | 100 | 100 | 2,0 | 10 | 10 | 0,01 | 40 | $1,4 \cdot 10^4$ |
| 21 | 300 | 100 | 100 | 2,0 | 20 | 20 | 0,01 | 40 | $1,3 \cdot 10^4$ |
| 22 | 300 | 100 | 100 | 2,0 | 30 | 30 | 0,01 | 40 | $1,35 \cdot 10^4$ |

Beispiel 23

Es wird verfahren wie in Beispiel 1. Anstelle von Mercaptoäthanol wird die äquivalente Menge Thioglykolsäure verwendet. Gegenüber Beispiel 1 wird hier ein wesentlich höhermolekulares Polymerisat mit einer breiteren Molekulargewichtsverteilung erhalten. (Mw = 334.000, U = 13,05).

**Patentansprüche**

1. Verfahren zur Herstellung eines wasserlöslichen Polymerisats oder Copolymerisats der Acryl- oder/und Methacrylsäure, bei dem eine wäßrige Lösung, die 50 bis 100 Mol-% an Acryl- oder Methacrylsäure und gegebenenfalls bis zu 50 Mol-% eines oder verschiedener mit Acryl- bzw. Methacrylsäure mischpolymerisierbaren Comononeren, bezogen auf die Molsumme der polymerisierbaren Monomeren, und als Initiatorsystem eine Mischung aus Wasserstoffperoxid, einem wasserlöslichen Eisensalz und einem wasserlöslichen Mercaptan enthält, auf eine zur Auslösung der radikalischen Polymerisation geeignete Temperatur gebracht wird, dadurch gekennzeichnet, daß die wäßrige Lösung zu einer klaren viskosen Polymerisatlösung polymerisiert wird.

2. Verfahren nach Anspruch 1 zur Herstellung eines wasserlöslichen Polymerisats oder Copolymerisats der Struktur

E - (- $S_n$ - $M_m$)p - E

worin E eine Endgruppe der Struktur H-, RS-, R-SO- oder HO-,
R den Rest eines wasserlöslichen Mercaptans, S eine polymerisierte Einheit der Acrylsäure oder der Methacrylsäure oder von deren einwertigem Salz,
M eine polymerisierte Einheit eines oder verschiedener mit Acrylsäure bzw. Methacrylsäure mischpolymerisierbarer Comonomerer,
p die mittlere Gesamtzahl der Einheiten S und M,
n den prozentualen Anteil der Einheiten S in Grundmol,
m den prozentualen Anteil der Einheiten M in Grundmol
bedeuten, wobei p den Mindestwert von 10 hat, n einen Wert von 50 bis 100 % und m einen Wert von 0 bis 50 % hat und die Einheiten S und M gemischt auftreten können, bei dem eine wäßrige Lösung, die 50 bis 100 Mol-% an Acryl- oder Methacrylsäure und gegebenenfalls bis zu 50 Mol-% eines oder verschiedener mit Acryl- bzw. Methacrylsäure mischpolymerisierbaren Comononeren, bezogen auf die Molsumme der polymerisierbaren Monomeren, und als Initiatorsystem eine Mischung aus Wasserstoffperoxid, einem wasserlöslichen Eisensalz und einem wasserlöslichen Mercaptan enthält, auf eine zur Auslösung der radikalischen Polymerisation geeignete Temperatur gebracht wird, dadurch gekennzeichnet, daß die wäßrige Lösung zu einer klaren viskosen Polymerisatlösung polymerisiert wird.

3. Verfahren nach Anspruch 1 oder 2, dadurch gekennzeichnet, daß, als Comonomere niedere Alkylester der Acryl- und/oder Methacrylsäure mit weniger als 4C-Atomen im Alkylrest eingesetzt werden.

4. Verfahren nach Anspruch 1 oder 2, dadurch gekennzeichnet, daß als wasserlösliches Mercaptan Mercaptoäthanol eingesetzt wird.

5. Verfahren nach wenigstens einem der Ansprüche 1 bis 4, dadurch gekennzeichnet, daß die klare viskose Polymerlösung durch Sprühtrocknung oder durch Walzentrocknung in ein pulverförmiges Festprodukt umgewandelt wird.

**Claims**

1. Process for the preparation of a water-soluble polymer or copolymer of acrylic acid and/or methacrylic acid, in which an aqueous solution, which contains 50 to 100 mole A% of acrylic acid or methacrylic acid and optionally up to 50 mole % of one or more comonomers which can be copolymerised with acrylic acid or methacrylic acid, relative to the molar sum of the monomers which can be polymerised, and a mixture of hydrogen peroxide, a water-soluble iron salt and a water-soluble mercaptan as initiator system, is brought to a temperature suitable for initiating free-radical polymerisation, characterised in that the aqueous solution is polymerised to give a clear, viscous polymer solution.

2. Process according to claim 1 for the preparation of a water-soluble polymer or copolymer of the structure

E - (-$S_n$ - $M_m$)p - E

wherein E denotes an end group of the structure H-, RS-, R-SO- or HO-,
R denotes the radical of a water-soluble mercaptan,
S denotes a polymerised unit of acrylic acid or methacrylic acid or monovalent salt thereof,
M denotes a polymerised unit of one or more comonomers which can be copolymerised with acrylic acid or methacrylic acid,
p denotes the average total number of units S and M,
n denotes the percentage portion of units S in the basic mole,
m denotes the percentage portion of units M in the basic mole, wherein p has the lowest value of 10, n has a value of 50 to 100% and m has a value of 0 to 50 % and the units S and M may occur as a mixture, in which an aqueous solution, which contains 50 to 100 mole % of acrylic acid or methacrylic acid and optionally up to 50 mole % of one or more comonomers which can be copolymerised with acrylic acid or methacrylic acid, relative to the molar sum of the monomers which can be polymerised, and a mixture of hydrogen peroxide, a water-soluble iron salt and a water-soluble mercaptan as initiator system, is brought to a temperature suitable for initiating free-radical polymerisation, characterised in that the aqueous solution is polymerised to give a clear, viscous polymer solution.

3. Process according to claim 1 or 2, characterised in that lower alkyl esters of acrylic acid and/or methacrylic acid having less than 4 C atoms in the alkyl radical are used as comonomers.

4. Process according to claim 1 or 2, characterised in that mercaptoethanol is used as water-soluble mercaptan.

5. Process according to at least one of claims 1 to 4, characterised in that the clear, viscous polymer solution is converted to a powdered solid product by means of spray-drying or by means of drum drying.

**Revendications**

1.- Procédé de préparation d'un polymère ou copolymère hydrosoluble de l'acide acrylique ou méthacrylique, dans lequel une solution aqueuse qui contient, par rapport à la somme en moles des monomères polymérisables, de 50 à 100% en moles d'acide acrylique ou méthacrylique, éventuellement jusqu'à 50% en moles d'un ou de différents comonomères copolymérisables avec l'acide acrylique ou méthacrylique et, en tant que système initiateur, un mélange de peroxyde d'hydrogène, d'un sel de fer hydrosoluble et d'un mercaptan hydrosoluble, est portée à une température convenant pour le déclenchement de la polymérisation radicalaire, caractérisé en ce que la solution aqueuse est transformée par polymérisation en une solution de polymère visqueuse limpide.

2.- Procédé selon la revendication 1 pour la préparation d'un polymère ou copolymère hydrosoluble de structure

E - (- S$_n$ - M$_m$)p - E

dans laquelle

E représente un groupe terminal de structure H-, RS-, R-SO- ou HO-,

R représente, le reste d'un mercaptan hydrosoluble,

S représente une unité polymérisée de l'acide acrylique, de l'acide méthacrylique ou d'un sel monovalent de ceux-ci,

M représente une unité polymérisée d'un ou de différents comonomères copolymérisables avec l'acide acrylique ou l'acide méthacrylique,

p représente le nombre total moyen des unités S et M,

n représente la part en pourcentage des unités S dans la molécule fondamentale et

m représente la part en pourcentage des unités M dans la molécule fondamentale,

p ayant la valeur minimale de 10, ayant une valeur de 50 à 100% et mune valeur de 0 à 50% et les unités S et M pouvant se présenter à l'état mélange, procédé dans lequel une solution aqueuse qui contient, par rapport à la somme en moles des monomères polymérisables, de 50 à 100% en moles d'acide acrylique ou méthacrylique, éventuellement jusqu'à 50% en moles d'un ou de différents comonomères copolymérisables avec l'acide acrylique ou méthacrylique et, en tant que système initiateur, un mélange de peroxyde d'hydrogène, d'un sel de fer hydrosoluble et d'un mercaptan hydrosoluble, est portée à une température convenant pour le déclenchement de la polymérisation radicalaire, caractérisé en ce que le solution aqueuse est transformée par polymérisation en une solution de polymère visqueuse limpide.

3.- Procédé selon la revendication 1 ou 2, caractérisé en ce qu'on utilise, comme comonomères, des esters alkyliques inférieurs de l'acide acrylique et/ou méthacrylique contenant moins de 4 atomes de carbone dans le reste alkyle.

4.- Procédé selon la revendication 1 ou 2, caractérisé en ce qu'on utilise, comme mercaptan hydrosoluble, du mercapto-éthanol.

5.- Procédé selon l'une quelconque des revendications 1 à 4, caractérisé en ce que la solution de polymère visqueuse limpide est transformée en un produit solide pulvérulent par séchage par pulvérisation ou par séchage au tambour.